# EUROPÄISCHE PATENTANMELDUNG

(11) **EP 0 799 683 A2**
(43) Veröffentlichungstag der Anmeldung: **08.10.1997**
(21) Anmeldenummer: 97102938.4
(22) Anmeldetag: 22.02.1997
(51) Int. Cl.: B29C 45/16, B29B 11/08, B32B 1/00

(54) **Verfahren zum Spritzgiessen von dreischichtigen Spritzlingen und Vorrichtung für die Durchführung des Verfahrens**

(30) Priorität: 04.04.1996 DE 19613779
(71) Anmelder: Fried. Krupp AG Hoesch-Krupp, 45143 Essen (DE)
(72) Erfinder: Blank, Michael, Dipl.-Ing., 42113 Wuppertal (DE); Schramm, Klaus, Dr. Ing., 45131 Essen (DE)

(57) **Zusammenfassung**

Ein Verfahren zum Spritzgießen von dreischichtigen Spritzlingen, insbesondere von Flaschenvorformlingen, mit einer inneren und einer äußeren Schicht aus einem Werkstoff "A", beispielsweise PET (Polyethylenterephthalat) und einer mittleren Schicht aus einem Werkstoff "B", beispielsweise PET-Rezyklat, wird mittels einer Vorrichtung durchgeführt, die mindestens ein Formwerkzeug (1) mit mehreren Formkavitäten und mindestens eine mit Düsen (2) versehene Heißläuferplatte aufweist. Hierbei entspricht die Anzahl der Düsen (2) der Anzahl der Formkavitäten. In jeder Düse (2) ist eine Verschlußnadel (3) verschiebbar angeordnet. Die Zuführung des einen Werkstoffs "A" bzw. "B" erfolgt über Schmelzezuführungskanäle durch die Verschlußnadel (3) hindurch und die Zuführung des anderen Werkstoff "B" bzw. "A", ebenfalls über Schmelzezuführungskanäle, durch den Zwischenraum zwischen dem Innenkörper (2.1) und dem Außenkörper (2.2) der Düse (2) hindurch.

## Beschreibung

Die Erfindung betrifft ein Verfahren zum Spritzgießen von dreischichtigen Spritzlingen, insbesondere von Flaschenvorformlingen, mit einer inneren und einer äußeren Schicht aus einem Werkstoff "A", beispielsweise PET (Polyethylenterephthalat) und einer mittleren Schicht aus einem Werkstoff "B", beispielsweise PET-Rezyklat, mittels einer Vorrichtung, die mindestens ein Formwerkzeug mit mehreren Formkavitäten und mindestens eine mit Düsen versehene Heißläuferplatte aufweist, wobei die Anzahl der Düsen der Anzahl der Formkavitäten entspricht und wobei in jeder Düse eine Verschlußnadel verschiebbar angeordnet ist. Die Erfindung betrifft ferner eine Vorrichtung für die Durchführung des Verfahrens.

Die Erfindung ist weder auf Flaschenvorformlinge noch auf den Werkstoff PET beschränkt. Sie ist auch anwendbar beim Spritzgießen von Spritzlingen für beliebige andere Zwecke aus beliebigen anderen Kunststoffen bzw. Kunststoffkombinationen. Beispielsweise kann die Erfindung auch beim Spritzgießen von Mehrschichtvorformlingen aus der Werkstoffkombination PET und PEN (Polyethylennaphtalat) Verwendung finden. Polyethylennaphtalat gehört - wie PET - zu der Werkstoffgruppe der Polyester, weist jedoch gegenüber PET weitaus bessere thermische Beanspruchungseigenschaften, allgemeine mechanische Eigenschaften sowie Barriereeigenschaften auf. Dieser noch verhältnismäßig neue Werkstoff ist u. a. jedoch bereits als Verpackungsmaterial in der Lebensmittelbranche von den jeweiligen staatlichen Institutionen freigegeben und aufgrund seiner hervorragenden Eigenschaften geeignet, schon bei verhältnismäßig kleinen Anteilen von 10 % bis 25 % am Gewicht des Vorformlings die Flaschenqualität deutlich zu erhöhen. Flaschen aus PET/PEN eignen sich beispielsweise besonders für die Heißabfüllung von Fruchtsäften sowie für den Einsatz in heißen Ländern.

Bei den genannten Vorformlingen bildet die mittlere Schicht einen Kern und die innere und die äußere Schicht bilden eine geschlossene Haut.

Bei den bekannten Verfahren der eingangs genannten Art wird zunächst der die innere und die äußere Schicht bildende Werkstoff "A" durch die Düse in das Formwerkzeug eingespritzt. Danach erfolgt das Einspritzen des die mittlerer Schicht bildenden Werkstoffs "B". Anschließend erfolgt ein Nachdrücken des die innere und die äußere Schicht bildende Werkstoffs "A", damit zu Beginn eines neuen Zyklusablaufs eine sogenannte "saubere" Schmelzevorlage des die innere und die äußere Schicht bildende Werkstoffs "A" vorliegt. Bei diesem Nachdrücken kann es vorkommen, daß der Werkstoff "A" in die warme Seele des die mittlere Schicht bildenden Werkstoffs "B" gedrückt wird, so daß dieser Bereich einen fünfschichtigen Aufbau erhält. Dies ist einerseits nicht erwünscht und führt andererseits zu einem höheren Anteil an Werkstoff "A" in dem Spritzling. Der Werkstoff "A" ist aber in aller Regel hochwertiger und damit teurer als der Werkstoff "B".

Der Erfindung liegt die Aufgabe zugrunde, die bei der Durchführung der bekannten Verfahren auftretenden Nachteile zu vermeiden und das Verfahren sowie die Vorrichtung für die Durchführung des Verfahrens so auszugestalten, daß der Anteil an Werkstoff "B" für die Bildung der mittleren Schicht eine optimale Größe aufweist.

Die gestellte Aufgabe wird bei dem eingangs genannten Verfahren dadurch gelöst, daß die Zuführung des einen Werkstoffs - "A" bzw. "B" - durch die Verschlußnadel hindurch und die Zuführung des anderen Werkstoff - "B" bzw. "A" - durch den Zwischenraum zwischen dem Innenkörper und dem Außenkörper der Düse hindurch erfolgt.

Das erfindungsgemäße Verfahren benutzt das Prinzip Thermoverschluß der sogenannten Nadellostechnologie und ermöglicht die Durchführung von Verfahrensschritten, die sicherstellen, daß der Spritzling über seine gesamte Länge einheitlich aus drei Schichten besteht und die die ungewollte Bildung von fünf Schichten im unteren Bereich des Spritzlings ausschließen.

Eine vorteilhafte Ausführungsform des erfindungsgemäßen Verfahrens weist die Verfahrensschritte auf,
- daß bei vorgeschobener Verschlußnadel - bis zur Berührung mit dem Außenkörper der Düse - durch die Verschlußnadel hindurch die Zuführung des Werkstoffs "A" für die Bildung der inneren und der äußeren Schicht erfolgt,
- daß danach bei zurückgeschobener Verschlußnadel die Zuführung des Werkstoffs "B" für die Bildung der mittleren Schicht - durch den Zwischenraum zwischen dem Innenkörper und dem Außenkörper der Düse hindurch - und ein Nachdrücken des Werkstoffs "B" erfolgt,
- daß sodann eine Dekomprimierung des Werkstoffs "B" durchgeführt wird,
- daß anschließend die Verschlußnadel wieder bis zur Berührung mit dem Außenkörper der Düse vorgeschoben wird, so daß die Zuführung des Werkstoffs "B" unterbrochen ist,
- und daß schließlich der Anguß versiegelt und der Spritzling entformt wird.

Bei dem so ausgestalteten erfindungsgemäßen Verfahren werden somit die Werkstoffe "A" und "B" sequenziell nacheinander eingespritzt und auf einen dritten Einspritzvorgang mit dem Werkstoff "A" wird verzichtet. Trotzdem liegt für den jeweils nächsten Verfahrenszyklus eine saubere Schmelzevorlage des die innere und die äußere Schicht bildende Werkstoffs "A" vor.

Eine andere vorteilhafte Ausführungsform des erfindungsgemäßen Verfahrens weist die Verfahrensschritte auf,
- daß bei zurückgeschobener Verschlußnadel die Zuführung des Werkstoffs "A" für die Bildung der inneren und der äußeren Schicht durch den Zwischenraum zwischen dem Innenkörper und dem Außenkörper der Düse hindurch erfolgt,
- daß danach die Verschlußnadel bis zur Berührung mit dem Außenkörper der Düse vorgeschoben wird, so daß die Zufuhr des Werkstoffs "A" unterbrochen ist,
- daß sodann - durch die Verschlußnadel hindurch - die Zuführung des Werkstoffs "B" für die Bildung der mittleren Schicht und ein Nachdrücken des Werkstoffs "B" erfolgt,
- daß anschließend eine Dekomprimierung des Werkstoffs "B" durchgeführt und anschließend die Verschlußnadel zurückgezogen wird
- und daß schließlich der Anguß versiegelt und der Spritzling entformt wird.

Auch bei dieser Ausführungsform des erfindungsgemäßen Verfahrens werden die Werkstoffe "A" und "B" sequenziell nacheinander eingespritzt und auf einen dritten Einspritzvorgang mit dem Werkstoff "A" wird verzichtet. Auch in diesem Falle liegt für den jeweils nächsten Verfahrenszyklus eine saubere Schmelzevorlage des die innere und die äußere Schicht bildende Werkstoffs "A" vor.

Bei der Vorrichtung für die Durchführung des Verfahrens, die mindestens ein Formwerkzeugs mit mehreren Formkavitäten und mindestens einen mit Düsen versehenen Düsenkörper aufweist, wobei die Anzahl der Düsen der Anzahl der Formkavitäten entspricht und wobei in jeder Düse eine Verschlußnadel verschiebbar angeordnet ist, ist die Verschlußnadel als Hohlnadel ausgebildet.

Durch die Ausbildung der Verschlußnadel als Hohlnadel hat diese keine Dichtfunktion zu den Kavitäten. Dies führt zu einer exakten thermischen Trennung zwischen dem schmelzeflüssigen Werkstoff "A" bzw. "B" und dem erstarrten Spritzling. Es verbleibt am Bodenteil des Spritzling lediglich ein kleiner Restzapfen aus Werkstoff "B" mit geringer Abrißhöhe.

Bei einer bevorzugten Ausführungsform der erfindungsgemäßen Vorrichtung beträgt der Innendurchmesser der die Verschlußnadel bildenden Hohlnadel an ihrem Austrittsende etwa 2 bis 3 mm.

Die erfindungsgemäße Vorrichtung kann noch dadurch verbessert werden, daß der Außendurchmesser des vorderen Endes der Verschlußnadel geringfügig kleiner ist als der Innendurchmesser der Eintrittsöffnung des Formwerkzeugs, so daß das vordere Ende der Verschlußnadel dichtschließend in die Eintrittsöffnung des Formwerkzeugs eindringen kann. Dies hat den Vorteil, daß die Toleranz für die Bewegung der Verschlußnadel nicht zu eng bemessen werden muß und eine bessere Dichtwirkung zwischen der Verschlußnadel und dem Formwerkzeug erzielt wird.

Bei einer anderen Ausgestaltung der erfindungsgemäßen Vorrichtung legt sich das vordere Ende der Verschlußnadel in vorgeschobener Stellung gegen einen in dem Außenkörper der Düse eingesetzten Ring an, der seinerseits an dem Formwerkzeug anliegt, und beträgt der Innendurchmesser des dem Formwerkzeug zugewandten Abschnitts des Ringes etwa 2 bis 3 mm.

In der Zeichnung sind mehrere Ausgestaltungsmöglichkeiten des erfindungsgemäßen Verfahrens und der Vorrichtung für die Durchführung des Verfahrens schematisch dargestellt. Es zeigen:
- Fig. 1: die jeweiligen Stellungen der Bestandteile einer Düse bei den einzelnen Verfahrensschritten eines ersten Einspritzprinzips;
- Fig. 2: den Druckverlauf beim Ablauf des ersten Einspritzprinzips;
- Fig. 3: die jeweiligen Stellungen der Bestandteile einer Düse bei den einzelnen Verfahrensschritten eines zweiten Einspritzprinzips;
- Fig. 4: den Druckverlauf beim Ablauf des zweiten Einspritzprinzips;
- Fig. 5: den vorderen Teil einer Düse mit einem Abschnitt des daran angrenzenden Formwerkzeugs;
- Fig. 6: den vorderen Teil einer anderen Düse mit einem Abschnitt des daran angrenzenden Formwerkzeugs.

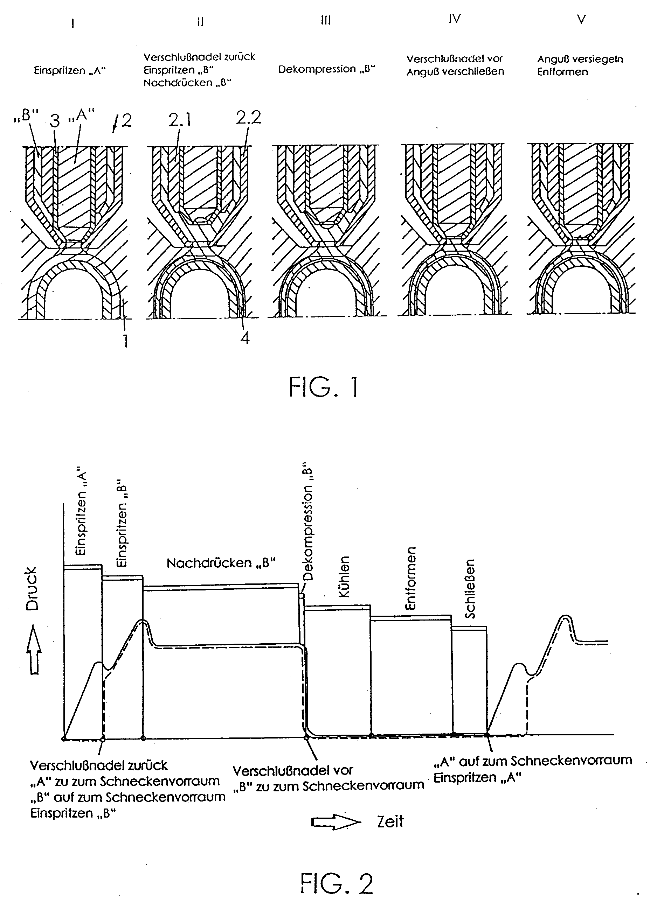

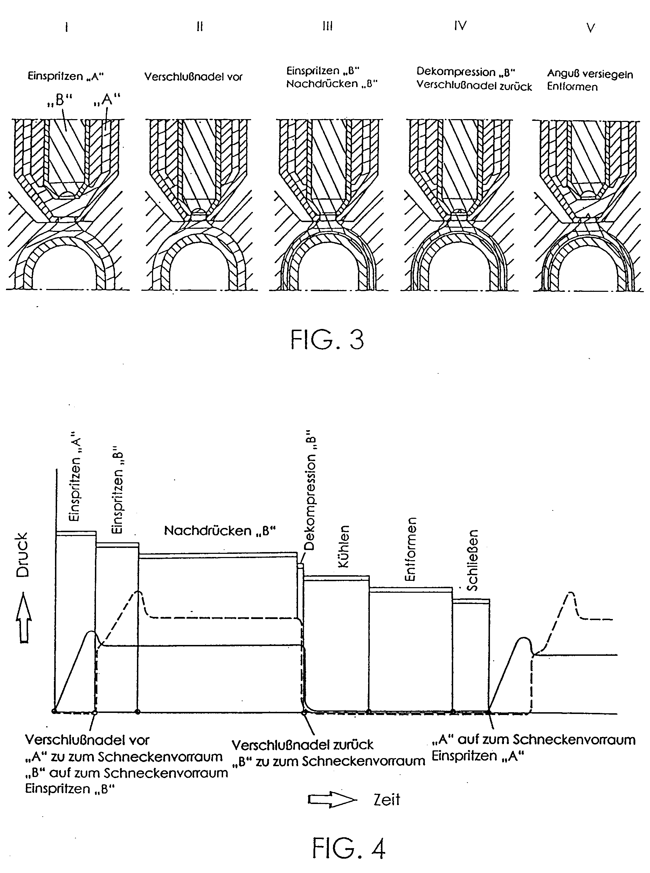

Die in den Fig. 1 und 3 dargestellten Ausführungsbeispiele zeigen jeweils ein Formwerkzeug 1 und eine Düse 2, wobei die Düse 2 aus dem Innenkörper 2.1 und dem Außenkörper 2.2 besteht und wobei in dem Innenkörper 2.1 eine Verschlußnadel 3 verschiebbar angeordnet ist. In dem Formwerkzeug 1 befindet sich der Spritzling 4.

Bei dem in Fig. 1 dargestellten Ausführungsbeispiel wird der Werkstoff "A" durch die Verschlußnadel 3 hindurch dem Formwerkzeug 1 zugeführt und der Werkstoff "B" durch den Zwischenraum zwischen dem Innenkörper 2.1 und dem Außenkörper 2.2 der Düse 2.

Bei dem in Fig. 3 dargestellten Ausführungsbeispiel wird der Werkstoff "A" durch den Zwischenraum zwischen dem Innenkörper 2.1 und dem Außenkörper 2.2 der Düse 2 dem Formwerkzeug 1 zugeführt und der Werkstoff "B" durch die Verschlußnadel 3 hindurch.

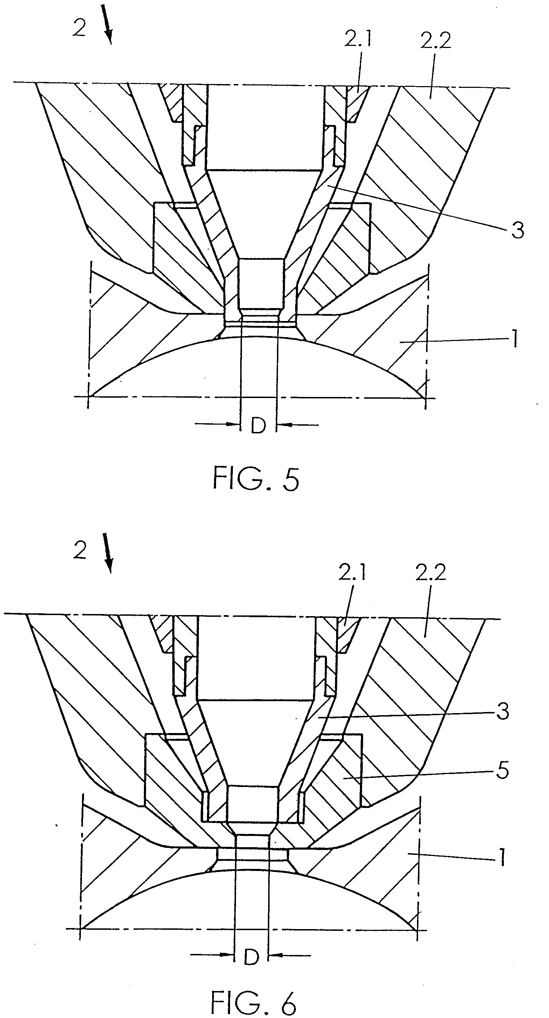

Die Fig. 1 und 2 beziehen sich auf den Verfahrensablauf gemäß Patentanspruch 2 und die Fig. 3 und 4 auf den Verfahrensablauf gemäß Patentanspruch 3, wobei die einzelnen Verfahrensschritte mit römischen Ziffern I bis V bezeichnet sind.

Die in den Fig. 1 und 3 dargestellten Verfahrensabläufe sind wegen der in der Zeichnung eingetragenen Beschriftungen auch ohne bis ins einzelne gehende Erläuterung nachzuvollziehen. Ebenso die in den Fig. 2 und 4 dargestellten Druckverläufe. Bei den in den Fig. 2 und 4 dargestellten Druckverläufen ist der sich auf den Werkstoff "A" beziehende Druckverlauf mit einer Vollinie und der sich auf den Werkstoff "B" beziehende Druckverlauf mit einer gestrichelten Linie angedeutet.

Die Fig. 5 und 6 zeigen den vorderen Teil einer Düse 2 mit einem Innenkörper 2.1 und einem Außenkörper 2.2, wobei in dem Innenkörper 2.1 eine Verschlußnadel 3 verschiebbar angeordnet ist, sowie einen Abschnitt des daran angrenzenden Formwerkzeugs 1.

Wie aus Fig. 5 zu ersehen ist, ist der Außendurchmesser des vorderen Endes der Verschlußnadel 3 geringfügig kleiner als der Innendurchmesser der Eintrittsöffnung des Formwerkzeugs 1, so daß das vordere Ende der Verschlußnadel 3 in die Eintrittsöffnung des Formwerkzeugs 1 eindringen kann. Die Verschlußnadel 3 weist an ihrem Austrittsende einen Innendurchmesser D auf.

Abweichend von Fig. 5 legt sich bei dem in Fig. 6 dargestellten Ausführungsbeispiel das vordere Ende der Verschlußnadel 3 in vorgeschobener Stellung gegen einen in dem Außenkörper 2.2 der Düse 2 eingesetzten Ring 5 an, der seinerseits an dem Formwerkzeug 1 anliegt. In diesem Falle weist der dem Formwerkzeug 1 zugewandte Abschnitt des Ringes 5 einen Innendurchmesser D auf.

## Patentansprüche

1. Verfahren zum Spritzgießen von dreischichtigen Spritzlingen, insbesondere von Flaschenvorformlingen, mit einer inneren und einer äußeren Schicht aus einem Werkstoff "A", beispielsweise PET (Polyethylenterephthalat) und einer mittleren Schicht aus einem Werkstoff "B", beispielsweise PET-Rezyklat, mittels einer Vorrichtung, die mindestens ein Formwerkzeug mit mehreren Formkavitäten und mindestens eine mit Düsen versehene Heißläuferplatte aufweist, wobei die Anzahl der Düsen der Anzahl der Formkavitäten entspricht und wobei in jeder Düse eine Verschlußnadel verschiebbar angeordnet ist,
**dadurch gekennzeichnet**,
daß die Zuführung des einen Werkstoffs "A" bzw. "B" über Schmelzezuführungskanäle durch die Verschlußnadel (3) hindurch und die Zuführung des anderen Werkstoff "B" bzw. "A" ebenfalls über Schmelzezuführungskanäle durch den Zwischenraum zwischen dem Innenkörper (2.1) und dem Außenkörper (2.2) der Düse (2) hindurch erfolgt.

2. Verfahren nach Anspruch 1, gekennzeichnet durch die Verfahrensschritte,
2.1 daß bei vorgeschobener Verschlußnadel (3) - bis zur Berührung mit dem Außenkörper (2.2) der Düse (2) - durch die Verschlußnadel (3) hindurch die Zuführung des Werkstoffs "A" für die Bildung der inneren und der äußeren Schicht erfolgt,
2.2 daß danach bei zurückgeschobener Verschlußnadel (3) die Zuführung der Werkstoffe "B" für die Bildung der mittleren Schicht - durch den Zwischenraum zwischen dem Innenkörper (2.1) und dem Außenkörper (2.2) der Düse (2) hindurch - und ein Nachdrücken des Werkstoffs "B" erfolgt,
2.3 daß sodann eine Dekomprimierung des Werkstoffs "B" durchgeführt wird,
2.4 daß anschließend die Verschlußnadel (3) wieder bis zur Berührung mit dem Außenkörper (2.2) der Düse (2) vorgeschoben wird, so daß die Zuführung des Werkstoffs "B" unterbrochen ist,
2.5 und daß schließlich der Anguß versiegelt und der Spritzling (4) entformt wird.

3. Verfahren nach Anspruch 1, gekennzeichnet durch die Verfahrensschritte,
3.1 daß bei zurückgeschobener Verschlußnadel (3) die Zuführung des Werkstoffs "A" für die Bildung der inneren und der äußeren Schicht durch den Zwischenraum zwischen dem Innenkörper (2.1) und dem Außenkörper (2.2) der Düse (2) hindurch erfolgt,
3.2 daß danach die Verschlußnadel (3) bis zur Berührung mit dem Außenkörper (2.2) der Düse (2) vorgeschoben wird, so daß die Zufuhr des Werkstoffs "A" unterbrochen ist,
3.3 daß sodann - durch die Verschlußnadel (3) hindurch - die Zuführung des Werkstoffs "B" für die Bildung der mittleren Schicht und ein Nachdrücken des Werkstoffs "B" erfolgt,
3.4 daß anschließend eine Dekomprimierung des Werkstoffs "B" durchgeführt und anschließend die Verschlußnadel (3) zurückgezogen wird
3.5 und daß schließlich der Anguß versiegelt und der Spritzling (4) entformt wird.

4. Vorrichtung für die Durchführung des Verfahrens nach einem der Ansprüche 1 bis 3, die mindestens ein Formwerkzeugs mit mehreren Formkavitäten und mindestens einen mit Düsen versehenen Düsenkörper aufweist, wobei die Anzahl der Düsen der Anzahl der Formkavitäten entspricht und wobei in jeder Düse eine Verschlußnadel verschiebbar angeordnet ist, **dadurch gekennzeichnet**, daß die Verschlußnadel (3) als Hohlnadel ausgebildet ist.

5. Vorrichtung nach Anspruch 4, dadurch gekennzeichnet, daß der Innendurchmesser (D) der die Verschlußnadel (3) bildenden Hohlnadel an ihrem Austrittsende etwa 2 bis 3 mm beträgt.

6. Vorrichtung nach Anspruch 5, dadurch gekennzeichnet, daß der Außendurchmesser des vorderen Endes der Verschlußnadel (3) geringfügig kleiner ist als der Innendurchmesser der Eintrittsöffnung des Formwerkzeugs (1), so daß das vordere Ende der Verschlußnadel (3) in die Eintrittsöffnung des Formwerkzeugs (1) eindringen kann.

7. Vorrichtung nach Anspruch 4, dadurch gekennzeichnet, daß sich das vordere Ende der Verschlußnadel (3) in vorgeschobener Stellung gegen einen in dem Außenkörper (2.2) der Düse (2) eingesetzten Ring (5) anlegt, der seinerseits an dem Formwerkzeug (1) anliegt, und daß der Innendurchmesser (D) des dem Formwerkzeug (1) zugewandte Abschnitt des Ringes (5) etwa 2 bis 3 mm beträgt.
